# EUROPEAN PATENT APPLICATION

(11) **EP 3 945 489 A1**
(43) Date of publication of application: **02.02.2022**
(21) Application number: 20188521.7
(22) Date of filing: 30.07.2020
(51) Int. Cl.: G06Q 50/30, G06Q 30/02, G07C 5/00, G07C 5/08

(54) **RIDE EVALUATION IN A RIDE SHARING SERVICE**

(71) Applicant: VOLKSWAGEN AG, 38440 Wolfsburg (DE)
(72) Inventor: Kruscha, Tatjana, 38106 Braunschweig (DE); Wohllebe, Thomas, 38547 Calberlah (DE); Wykowski, Ellen, 39116 Magdeburg (DE)

(57) **Abstract**

The present invention is related to a method, a computer program, and an apparatus for providing a predictive ride evaluation to a user of a ride service. The invention is further related to a vehicle and a backend for a ride service, which make use of such a method or apparatus. In a first step, driver-related data and vehicle-related data are collected (10). The collected driver-related data and vehicle-related data are evaluated (11) with regard to aspects related to at least one category, such as safety, reliability, or eco-balance, to determine a predictive ride evaluation. The predictive ride evaluation is then provided (12) to a user.

## Description

The present invention is related to a method, a computer program, and an apparatus for providing a predictive ride evaluation to a user of a ride service. The invention is further related to a vehicle and a backend for a ride service, which make use of such a method or apparatus.

Ride services, such as ride-sharing, are becoming increasingly popular. However, many people still abstain from taking an offered ride, especially if they do not know or hardly know the driver, as they fear that the driver may drive unsafely or does not observe the basics of driving safety. Furthermore, even if they take the ride, such a ride can be very stressful and thus very exhausting for the persons concerned. In order to make it easier for these people to ride along with drivers they do not know well, at least in terms of emotional stress, the safety needs of passengers should be met to a large extent. A potential passenger wants to be certain that the planned journey will not be unpleasant.

While ride services often offer the possibility to rate drivers, evaluating driver only based on such ratings is not very reliable. In particular, the ratings for a driver may easily be manipulated, e.g. via numerous entries made by the driver himself or on his behalf.

In this regard, US 7,561,054 B2 discloses a method for analyzing and evaluating the performance and behavior of a driver of a vehicle, and for displaying the results of the analysis and evaluation. A vehicle sensor utility is used to monitor the state of the vehicle while being driven by the driver. A raw data stream from the vehicle sensor utility is input to a driving event handler that detects driving events in the raw data stream and outputs to a maneuver detector a driving event string. The maneuver detector is configured to recognize patterns of driving maneuvers. One or more ratings of the driver's driving performance are calculated based upon the driving maneuvers as executed by the driver. The ratings are displayed on a display.

CN 102044095 A discloses a personal driving behavior analysis management control system, comprising a data reading terminal, a GPS (global positioning system) positioning device and a server. The data reading terminal is used for acquiring operational data electronic control units of the vehicle, reading automobile travelling working condition data, creating a driver operation behavior data evaluation analysis model, giving an alarm when finding a dangerous driving behavior, emergently recording vehicle accident data, carrying out statistic on automobile travelling mileage and fuel consumption and detecting whether vehicle emission exceeds the standard or not. The GPS positioning device is used for vehicle positioning. The server is used for recording and analyzing driving behavior data, timely reminding a vehicle maintenance fault by combining on-board diagnostics vehicle diagnostic function and exchanging information with a user by virtue of an interconnection platform.

US 10,467,824 B2 discloses a method for determining driving characteristics of a vehicle. To provide an enhanced method to determine from a driving characteristics of the vehicle a long term mechanical stress of a vehicle, it is proposed that during operation of the vehicle an acceleration of the vehicle is detected by an acceleration sensor in the vehicle and evaluated by a vehicle analyzing system in the vehicle, wherein a driving parameter occurring during an acceleration event in which the vehicle acceleration is above a predetermined threshold is used to determine a driving characteristics value of the vehicle.

It is an object of the present invention to provide improved solutions for providing a predictive ride evaluation to a user of a ride service.

This object is achieved by a method according to claim 1, by a computer program according to claim 10, which implements this method, and by an apparatus according to claim 11. The dependent claims include advantageous further developments and improvements of the present principles as described below.

According to a first aspect, a method for providing a predictive ride evaluation to a user of a ride service comprises the steps of:
- collecting driver-related data and vehicle-related data;
- evaluating the collected driver-related data and vehicle-related data with regard to aspects related to at least one category to determine a predictive ride evaluation; and
- providing the predictive ride evaluation to a user.

Accordingly, a computer program comprises instructions, which, when executed by at least one processor, cause the at least one processor to perform the following steps for providing a predictive ride evaluation to a user of a ride service:
- collecting driver-related data and vehicle-related data;
- evaluating the collected driver-related data and vehicle-related data with regard to aspects related to at least one category to determine a predictive ride evaluation; and
- providing the predictive ride evaluation to a user.

The term computer has to be understood broadly. In particular, it also includes embedded devices, workstations, distributed systems and other processor-based data processing devices.

The computer program code can, for example, be made available for electronic retrieval or stored on a computer-readable storage medium.

According to another aspect, an apparatus for providing a predictive ride evaluation to a user of a ride service comprises:
- a data collection module configured to collect driver-related data and vehicle-related data;
- a data evaluation module configured to evaluate the collected driver-related data and vehicle-related data with regard to aspects related to at least one category to determine a predictive ride evaluation; and
- an output module configured to provide the predictive ride evaluation to a user.

According to the invention, a predictive ride evaluation is provided to a user who wants to make use of a ride service. For this purpose, driver-related data as well as vehicle-related data are collected and evaluated with regard to one or more categories that are relevant for the user. In each category, a point value or a star rating may be determined. The higher the value or the rating of a particular category, the more suitable the ride is for a person for whom this category is important. Preferably, the user has the possibility to prioritize the categories according to his preferences. The solution according to the invention makes it easier for people who feel unsafe or are striving for a safety optimum to ride along with drivers they hardly know.

In an advantageous embodiment, the collected driver-related data and vehicle-related data comprise current data and a history of past data. Using current data is particularly helpful for analyzing a current situation and detecting situations that are not typical for a particular driver, e.g. signs of illness or emotional stress. Using a history of data allows, for example, evaluating a typical behavior of a driver, such as the driving style.

In an advantageous embodiment, the at least one category is one of safety, reliability, and eco-balance. For the user of a ride service the most important question will generally be whether a particular ride is safe. However, an ecologically aware user may likewise prefer a particular ride because of its better eco-balance. Furthermore, irrespective of the safety or the eco-balance it might be important for a user to know whether a particular driver is reliable, e.g. punctual or known to keep promises.

In an advantageous embodiment, the driver-related data comprises data related to driving behavior of the driver, routes driven by the driver, condition of the driver, or the person of the driver. The driving behavior, in particular the driving style, has a very high relevance for the safety and the eco-balance. Form the routes driven by the driver it can be determined if the driver avoids dangerous routes, which is relevant for the safety. From the condition of the driver it can be determined if the driver shows signs of illness or of an incapacity or limited ability to drive. For example, using an alcohol detection system, it may be determined if the driver has consumed alcoholic beverages and shows an alcohol level that is unacceptably high or is forbidden by law. In this case, the safety of a ride could be greatly reduced. Such an alcohol detection system may, for example, be integrated in the steering wheel or the headliner of the vehicle and analyze the exhaled breath of the driver. Data related to the person of the driver can include driver characteristics like age, gender, or size. These data may be used for an automatic risk calculation and may be derived from images provided by an interior camera.

In an advantageous embodiment, the vehicle-related data comprises data related to a configuration of the vehicle or a condition in an interior of the vehicle. For example, the data related to a configuration of the vehicle may include information about which equipment is available in the vehicle, e.g. which driver assistance or information systems. Further aspects are the availability of a (partially) autonomous driving functionality, the type and model of the vehicle and the engine, e.g. combustion engine or electric motor. All these data have a significant impact on either the inherent safety of the vehicle or its eco-balance. The data related to a condition in an interior of the vehicle may include information about the number and age of occupants currently in the vehicle, the presence of animals in the vehicle, or the presence of objects that might potentially become dangerous during driving. The condition in the interior of the vehicle has a large influence if a potential user will feel comfortable during a ride.

In an advantageous embodiment, the driver-related data and the vehicle-related data are obtained using sensors of a vehicle, from a driver assistance system of the vehicle, from one or more service providers, or from input provided by other users. A large fraction of the data that are relevant for a meaningful predictive ride evaluation can be obtained with sensors of the vehicle. For example, data obtained by an interior camera or data provided by a hands-on detection system or an electronic stability control (ESC) can be analyzed. Data related to the eco-balance may be provided, for example, by a manufacturer of the vehicle. Data related to the reliability of a driver may be obtained from user evaluations of the driver in portals or in booking applications. By combining the various data source, a comprehensive ride evaluation is achieved.

In an advantageous embodiment, evaluation parameters used for evaluating the collected driver-related data and vehicle-related data are location-dependent. The evaluation of the collected data may be culturally or regionally adapted, i.e. different aspects of the driver-related data and vehicle-related data may be given more weight. In this way it is possible to take account of preferences found in a particular culture or region, e.g. in a large city or in rural areas.

In an advantageous embodiment, the predictive ride evaluation is provided to the user through an application running on a mobile device of the user, through a ride service portal, or through a display of a vehicle. By providing the predictive ride evaluation to the user through an application running on a mobile device of the user or through a ride service portal, the user has a reliable basis for deciding whether he wants to choose a particular ride. If the predictive ride evaluation is provided to the user through a display of a vehicle, the user still has the possibility to refrain from sharing a ride with a specific driver upon entering the vehicle.

Advantageously, a vehicle comprises an apparatus according to the invention or is configured to perform a method according to the invention for providing a predictive ride evaluation to a user of a ride service. In this way, a user entering the vehicle for a ride still has the possibility to refrain from sharing a ride with a specific driver.

Advantageously, a mobile device comprises an apparatus according to the invention or is configured to perform a method according to the invention for providing a predictive ride evaluation to a user of a ride service. In this way, the user has a reliable basis for deciding whether he wants to choose a particular ride.

Advantageously, a backend for a ride service comprises an apparatus according to the invention or is configured to perform a method according to the invention for providing a predictive ride evaluation to a user of the ride service. In this way, the user has a reliable basis for deciding whether he wants to choose a particular ride.

Further features of the present invention will become apparent from the following description and the appended claims in conjunction with the figures.
- Fig. 1: schematically illustrates a method for providing a predictive ride evaluation to a user of a ride service;
- Fig. 2: schematically illustrates a first embodiment of an apparatus for providing a predictive ride evaluation to a user of a ride service;
- Fig. 3: schematically illustrates a second embodiment of an apparatus for providing a predictive ride evaluation to a user of a ride service;
- Fig. 4: shows a system diagram of a solution according to the invention; and
- Fig. 5: shows a block diagram of an electronics system of a vehicle.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

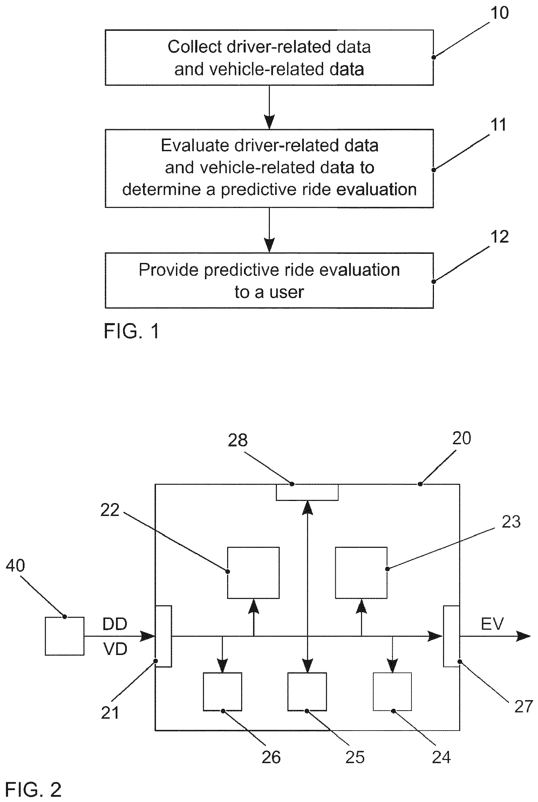

Fig. 1 schematically illustrates a method according to the invention for providing a predictive ride evaluation to a user of a ride service. For example, the method may be implemented in a backend of the ride service, in a vehicle, or in a mobile device. In a first step, driver-related data and vehicle-related data are collected 10. The driver-related data and the vehicle-related data may be obtained using sensors of a vehicle, from a driver assistance system of the vehicle, from one or more service providers, or from input provided by other users. Preferably, the collected driver-related data and vehicle-related data comprise current data as well as a history of past data. The driver-related data may comprise, for example, data related to driving behavior of the driver, routes driven by the driver, condition of the driver, or the person of the driver. The vehicle-related data may comprise, for example, data related to a configuration of the vehicle or a condition in an interior of the vehicle. The collected driver-related data and vehicle-related data are evaluated 11 with regard to aspects related to at least one category, such as safety, reliability, or eco-balance, to determine a predictive ride evaluation. Evaluation parameters that are used for evaluating 11 the collected driver-related data and vehicle-related data may be location-dependent .Finally, the predictive ride evaluation is provided 12 to the user, e.g. through an application running on a mobile device of the user, through a ride service portal, or through a display of a vehicle.

Fig. 2 schematically illustrates a block diagram of a first embodiment of an apparatus 20 according to the invention for providing a predictive ride evaluation to a user of a ride service. For example, the apparatus 20 may be located in a backend of the ride service, in a vehicle, or in a mobile device. The apparatus 20 has an input 21 for receiving data, e.g. from sensors of a vehicle 40, from a driver assistance system of the vehicle 40, from one or more service providers, or from input provided by other users. A data collection module 22 is configured to collect driver-related data DD and vehicle-related data VD. Preferably, the collected driver-related data DD and vehicle-related data VD comprise current data as well as a history of past data. The driver-related data DD may comprise, for example, data related to driving behavior of the driver, routes driven by the driver, condition of the driver, or the person of the driver. The vehicle-related data VD may comprise, for example, data related to a configuration of the vehicle or a condition in an interior of the vehicle. A data evaluation module 23 is configured to evaluate the collected driver-related data DD and vehicle-related data VD with regard to aspects related to at least one category, such as safety, reliability, or eco-balance, to determine a predictive ride evaluation EV. Evaluation parameters that are used be the data evaluation module 23 for evaluating the collected driver-related data DD and vehicle-related data VD may be location-dependent .The predictive ride evaluation EV is provided to the user via an output 27 by an output module 24. The predictive ride evaluation EV may be presented to the user by an application running on a mobile device of the user, by a ride service portal, or by a display of a vehicle. A local storage unit 26 is provided, e.g. for storing data during processing. The output 27 may also be combined with the input 21 into a single bidirectional interface.

The data collection module 22, the data evaluation module 23, and the output module 24 may be controlled by a controller 25. A user interface 28 may be provided for enabling a user to modify settings of the data collection module 22, data evaluation module 23, the output module 24, or the controller 25. The data collection module 22, the data evaluation module 23, the output module 24, and the controller 25 can be embodied as dedicated hardware units. Of course, they may likewise be fully or partially combined into a single unit or implemented as software running on a processor, e.g. a CPU or a GPU.

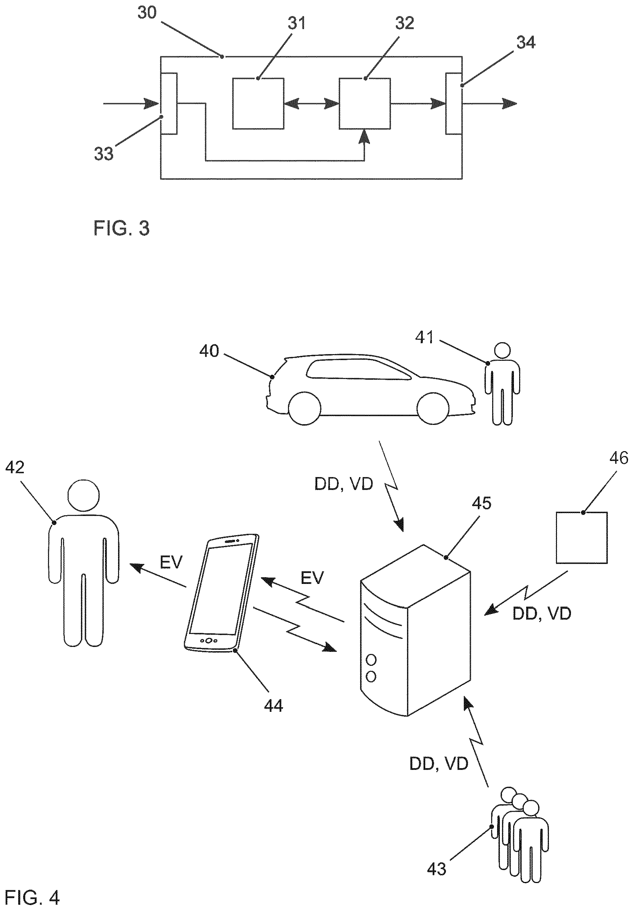

A block diagram of a second embodiment of an apparatus 30 according to the invention for providing a predictive ride evaluation to a user of a ride service is illustrated in Fig. 3. The apparatus 30 comprises a processing device 31 and a memory device 32. For example, the apparatus 30 may be a computer, an electronic control unit or an embedded system. The memory device 32 has stored instructions that, when executed by the processing device 31, cause the apparatus 30 to perform steps according to one of the described methods. The instructions stored in the memory device 32 thus tangibly embody a program of instructions executable by the processing device 31 to perform program steps as described herein according to the present principles. The apparatus 30 has an input 33 for receiving data. Data generated by the processing device 31 are made available via an output 34. In addition, such data may be stored in the memory device 32. The input 33 and the output 34 may be combined into a single bidirectional interface.

The processing device 31 as used herein may include one or more processing units, such as microprocessors, digital signal processors, or a combination thereof.

The local storage unit 26 and the memory device 32 may include volatile and/or non-volatile memory regions and storage devices such as hard disk drives, optical drives, and/or solid-state memories.

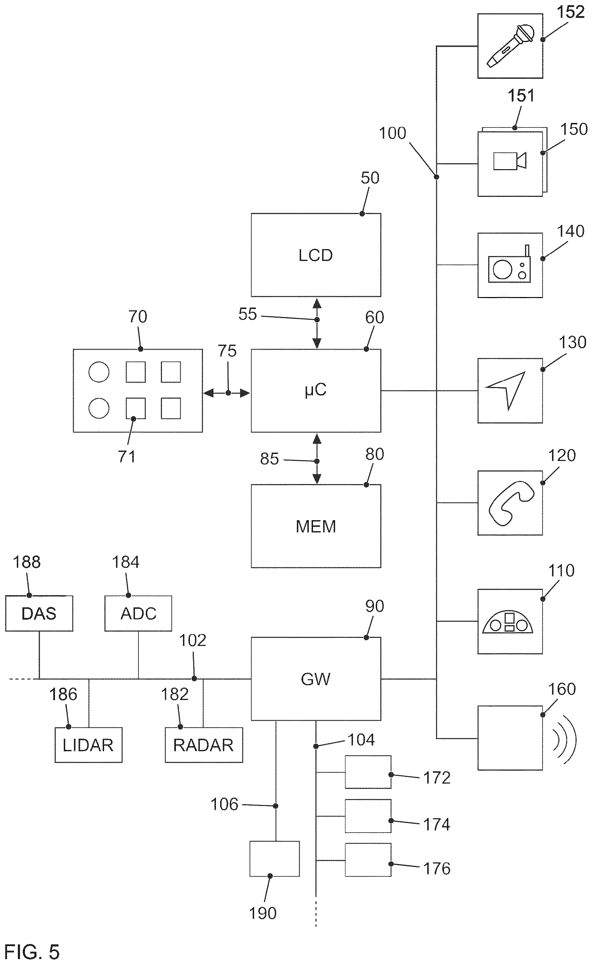

In the following, a preferred embodiment of the invention shall be explained in more detail with reference to Fig. 4 and Fig. 5.

Fig. 4 shows a system diagram of a solution according to the invention. A user 42 wants to make use of a ride service, e.g. by sharing a ride with a driver 41 of a vehicle 40. For this purpose, the user 42 may order a ride via an application of a provider of ride service, which runs on a mobile device 44 of the user 42, e.g. a smartphone or a tablet. Alternatively, the ride may be ordered via a service portal of the provider. Typically, the user 42 wants to be certain that the planned ride will not be unpleasant. To this end, a predictive ride evaluation EV is provided to the user, which may give an evaluation of the potential ride in one or more categories, such as safety, reliability, or eco-balance. In this example, the predictive ride evaluation EV is determined in a backend 45 of the ride service based on collected driver-related data DD and vehicle-related data VD. The driver-related data DD or the vehicle-related data VD may be obtained using sensors of the vehicle 40, from one or more service providers 46, or from input provided by other users 43.

In the example of Fig. 4, the predictive ride evaluation EV is determined in the backend 45 of the ride service and made available to the user 42 by the application running on the mobile device 44. Similarly, the predictive ride evaluation EV may be made available to the user 42 via the service portal of the provider. As a further possibility, the predictive ride evaluation EV may be provided to the user 42 on a display of the vehicle 40, i.e. shortly before the ride takes place. In this way, the user 42 still has the possibility to refrain from sharing a ride with a specific driver.

The predictive ride evaluation EV is not necessarily generated in the backend 45. It may likewise be generated by the application running on the mobile device 44 based on data provided by the backend 45, the vehicle 40, or the service providers 46. Also, it may be generated in the vehicle 40 based on data available in the vehicle 40 or provided by the backend 45 or the service providers 46.

Driver-related data that are relevant to safety can be, for example, data related to a driving behavior of a driver, data related to routes used by the driver, data related to a condition of the driver, or data related to the person of the driver. Vehicle-related data that are relevant to safety can be, for example, data related to a configuration of the vehicle or data related to a condition in an interior of the vehicle.

Data related to the driving behavior may be determined using a plurality of parameters. For example, it may by analyzed if the driver generally has both hands on the steering wheel. For this purpose, the maximum duration or the frequency of one-handed driving may be determined. Furthermore, the frequency of situations that require intervention of a driver assistance system, e.g. near-accident situations or interventions by an electronic stability control, may be determined. A safe driving style may also be determined from environmental parameters obtained by sensors of the vehicle, e.g. by evaluating data of sensors provided for autonomous or semi-autonomous driving. Furthermore, it may be checked whether relevant driver assistance systems are active while driving or deactivated.

In particular, an unsafe driving style may be determined if the driver is currently driving dangerously or has done so in the past, especially over a longer period of time. For example, it may be checked if the driver currently drives overtired or if he has done so in the past, potentially over a longer period of time. For this purpose, data of a fatigue detection system may be evaluated. Furthermore, it may be checked whether the driver has already fallen asleep for a short time or a longer time when the vehicle was in an autonomous or semi-autonomous driving mode. Also for this purpose, data of the fatigue detection system may be evaluated. Further aspects that may be evaluated are how close the driver usually approaches other vehicles, pedestrians or cyclists, and how often a distance warning does occur. For this purpose, data of an automatic cruise control may be evaluated. Data of an emergency assistant may be analyzed to determine if there recently have been accidents or near-accidents or how many kilometers the driver has driven n a defined period of time without an accident or without emergency braking or intervention of safety systems. It may also be checked what is the average, lowest or highest accident risk value. A further aspect that may be evaluated is whether the driver and passengers fasten their seat belts in good time before starting the ride. For this purpose, data of seat belt buckle sensors may be used. Also the driving speed may be evaluated. For example, it may be determined how often the driver exceeds the permitted speed limit or reduces the speed very late or if the driver drives at an appropriate speed. For this purpose, the visibility obtained from a fog camera may be considered. Furthermore, it may be checked whether the driver frequently parks or stop in prohibited or dangerous places, e.g. on the road, on footpaths and cycle paths or outside parking areas. Environment sensors may be used for this purpose. Of course, national laws can be taken into account for the assessment of safety.

Gaze detection using data of an interior camera may be implemented for evaluating whether the driver looks sufficiently at the road while driving and recognizes dangers such as pedestrians, cyclists, or other vehicles, as well as obstacles, e.g. construction sites, or whether he has done so in the past. Also a more detailed evaluation of the driver's behavior or the driver situation is possible by means of the interior camera. For example, it may be determined if the driver is currently distracted or has been distracted in the past, in particular over a defined time period, while driving. Furthermore, it may be checked if the driver reads or looks at other information inside or outside the vehicle for too long, e.g. information provided by a smartphone, a driver information system, or an advertisement outside the vehicle. Likewise, it may be determined whether the driver looks excessively at other passengers or even physically turns towards other passengers. For this purpose, it may be detected if the driver looks to the side or the rear or whether there is any pertinent movement of the head, the arms or the hands. Furthermore, it may be checked if the driver grabs a bottle to drink something during sections of the route, in particular during dangerous sections or over a longer period of time, or if the driver holds other objects while driving, e.g. a smartphone, a storage medium, a remote control, an animal. A further possibility consists in determining a number of detected driving errors.

An alcohol detection system may be used to determine if the driver has consumed alcoholic beverages and shows an alcohol level that is unacceptably high or is forbidden by law. In this case, the safety of a ride could be greatly reduced. Such an alcohol detection system may, for example, be integrated in the steering wheel or the headliner of the vehicle and analyze the exhaled breath of the driver.

Data related to routes used by the driver may likewise be analyzed for assessing the safety of the rides of a driver. For this purpose, a variety of criteria may be used. For example, it may be checked whether the driver currently drives a dangerous route or has done so in the past. Avoiding dangerous routes helps to avoid accidents or to at least minimizes the probability of accidents. Furthermore, it may be analyzed whether the driver currently drives a route that deviates from a planned route or whether he has done so in the past.

A route may be considered dangerous, for example, if it comprises many accident black spots or is prone to criminality. The determination whether a route is dangerous or safe may be made based on information and maps of accident black spots or data available in a navigation system about routes that are considered safe routes. The determination may be culturally or regionally adapted, i.e. depending on the culture or region, different aspects of the routes may be given more weight. A current risk assessment of a route during a ride may be taken into consideration. The current risk assessment may be provided in real-time to the user, e.g. through an application running on a mobile device of the user.

Data related to the person of the driver may in particular include information whether the vehicle does in fact have a driver or rather is an autonomous vehicle. Furthermore, driver characteristics like age, gender, or size may be automatically recognized by an interior camera and used for an automatic risk calculation or estimation by programs in the vehicle or the backend. Furthermore, it may be checked if the driver can be identified, e.g. via face recognition or another automatic person recognition, via a password, or via a reliable entry in a computer system or the backend.

Data related to the condition of the driver may in particular include signs of illness or of an incapacity or limited ability to drive. For example, it may be analyzed whether the driver shows a conspicuous behavior, e.g. motion sequences that are untypical for the driver, such as disproportionately nervous movements while driving. Likewise, it may be checked if body readings from portable medical measuring devices, such as fitness wristbands, health apps on smartphones, or from fixed measuring devices for body parameters installed in the vehicle, show conspicuous, dangerous or even critical values. Examples of body readings are pulse and blood pressure. Similarly, frequent coughing or sneezing may be detected by an interior camera. Using this data, it may be determined if the driver has been sufficiently fit to drive in the past and if he currently is fit to drive. Through an analysis of the interior air or the breathing air, alcohol consumption may be detected.

Data related to the condition in the interior of the vehicle may be obtained, for example, using an interior camera. Based on images of the interior camera the number and age of occupants currently in the vehicle may be detected. This data may be used for an automatic risk calculation or estimation based on the number and composition of persons, e.g. the presence of children, adolescents, etc. Similarly, animals in the vehicle and their situation may be recognized, e.g. a dog sitting freely on a seat. Furthermore, objects that might potentially become dangerous during driving may be detected, e.g. shopping bags on a seat.

Data related to the configuration of the vehicle may include information about which equipment is available in the vehicle, e.g. which driver assistance or information systems. Further aspects are the availability of a (partially) autonomous driving functionality, the type and model of the vehicle and the engine, e.g. combustion engine or electric motor.

Driver-related data that are relevant to reliability can be, for example, data related to the punctuality of the driver or information whether the driver is known to keep promises. In this regard, use may be made of available evaluations of the driver in portals or in booking applications.

Vehicle-related data that are relevant to the eco-balance can be, for example, data related to a configuration of the vehicle. For example, the eco-balance may be determined based on a known emission of CO2 or nitrogen oxides of a given vehicle model, the type of engine, or the type and source of the energy used for driving, e.g. electricity from renewable energies or liquefied petroleum gas (LPG).

Driver-related data that are relevant to the eco-balance can be, for example, data related to a driving behavior of a driver. In this regard it may be considered how fuel-efficiently the driver drives or for which percentage of the drive electricity or LPG is used. Furthermore, it may be analyzed whether the driver generally bypasses areas and zones that need to be protected from pollutants, such as hospitals, schools, special building complexes and defined zones. This analysis may be based on navigation maps.

Fig. 5 schematically shows a block diagram of a board electronics system of a vehicle 40, which is suitable for use with a solution for providing a predictive ride evaluation to a user of a ride service. Part of the board electronics system is an infotainment system, which comprises a touch-sensitive display unit 50, a computing device 60, an input unit 70, and a memory device 80. The display unit 50 is connected to the computing device 60 via a data line 55 and includes both a display area for displaying variable graphical information and an operator interface (touch-sensitive layer) arranged above the display area for inputting commands by a user. The input unit 70 is connected to the computing device 60 via a data line 75. Reference numeral 71 designates a press button that allows a driver to manually request a tele-operated driving session if the vehicle is blocked and the driver wants the support of a tele-operated driving operator to find a way out of the blocking situation. There is no need for a dedicated press button 71 if other techniques for manual control are used. This includes selecting an option in a user menu displayed on the display unit 50, detecting the command with speech recognition, or using gesture control means.

The memory device 80 is connected to the computing device 60 via a data line 85. In the memory device 80, a pictogram directory and/or symbol directory is deposited with pictograms and/or symbols for possible overlays of additional information.

The other parts of the infotainment system, such as a microphone 152, a camera 150, radio 140, navigation device 130, telephone 120 and instrument cluster 110 are connected via a data bus 100 with the computing device 60. As data bus 100, the high-speed variant of the CAN (Controller Area Network) bus according to ISO standard 11898-2 may be used. Alternatively, an Ethernet-based bus system such as IEEE 802.03cg can be used. Bus systems implementing the data transmission via optical fibers are also usable. Examples are the MOST Bus (Media Oriented System Transport) or the D2B Bus (Domestic Digital Bus). For inbound and outbound wireless communication, the vehicle is equipped with an on-board connectivity module 160. It can be used for mobile communication, e.g. mobile communication according to the 5G standard.

Reference numeral 172 denotes an engine control unit. Reference numeral 174 denotes an ESC (electronic stability control) unit, whereas reference numeral 176 denotes a transmission control unit. The networking of such control units, all of which are allocated to the category of the drive train, typically occurs with a CAN bus 104. Since various sensors are installed in the motor vehicle and these are no longer only connected to individual control units, such sensor data are also distributed via the bus system 104 to the individual control devices.

Modern vehicles may comprise additional components, such as further sensors for scanning the surroundings, like a LIDAR sensor 186 or a RADAR sensor 182 and additional video cameras 151, e.g. a front camera, a rear camera or side cameras. Such sensors are increasingly used in vehicles for observation of the environment. Further control devices, such as an automatic driving control (ADC) unit 184, etc., may be provided in the vehicle. The RADAR and LIDAR sensors 182, 186 may have a scanning range of up to 250 m, whereas the cameras 150, 151 may cover a range from 30 m to 120 m. A plurality of further driver assistance systems (DAS) 188 may be provided. The components 182 to 188 are connected to another communication bus 102, e.g. an Ethernet-Bus due to its higher bandwidth for data transport. One Ethernet-bus adapted to the special needs of car communication is standardized in the IEEE 802.1Q specification.

Reference numeral 190 denotes an on-board diagnosis interface, which is connected to another communication bus 106.

For the purpose of transmitting relevant sensor data via the an on-board connectivity module 160 to a backend, a gateway 90 is provided. This gateway 90 is connected to the different bus systems 100, 102, 104 and 106. The gateway 90 is adapted to convert the data it receives via one bus to the transmission format of another bus so that it can be distributed using the packets specified for the respective other bus. For forwarding this data to the outside, i.e. to the backend, the on-board connectivity module 160 is equipped with a communication interface to receive these data packets and, in turn, to convert them into the transmission format of the appropriate mobile radio standard.

### Reference numerals

- 10: Collect driver-related data and vehicle-related data
- 11: Evaluate driver-related data and vehicle-related data to determine a predictive ride evaluation
- 12: Provide predictive ride evaluation to a user
- 20: Apparatus
- 21: Input
- 22: Data collection module
- 23: Data evaluation module
- 24: Output module
- 25: Controller
- 26: Local storage unit
- 27: Output
- 28: User interface
- 30: Apparatus
- 31: Processing device
- 32: Memory device
- 33: Input
- 34: Output
- 40: Vehicle
- 41: Driver
- 42: User
- 43: Other users
- 44: Mobile device
- 45: Backend
- 46: Service provider
- 50: Display Unit
- 55: Data line to display unit
- 60: Computing device
- 70: Input unit
- 71: Press button
- 75: Data line to input unit
- 80: Memory unit
- 85: Data line to memory unit
- 90: Gateway
- 100: First data bus
- 102: Second data bus
- 104: Third data bus
- 106: Fourth data bus
- 110: Instrument cluster
- 120: Telephone
- 130: Navigation device
- 140: Radio
- 150: Camera
- 151: Further cameras
- 152: Microphone
- 160: On-board connectivity module
- 172: Engine control unit
- 174: Electronic stability control unit
- 176: Transmission control unit
- 182: RADAR sensor
- 184: Automatic driving control unit
- 186: LIDAR sensor
- 188: Driver assistance system
- 190: On-board diagnosis interface
- DD: Driver-related data
- EV: Ride evaluation
- VD: Vehicle-related data

## Claims

1. A method for providing a predictive ride evaluation (EV) to a user (42) of a ride service, the method comprising:
- collecting (10) driver-related data (DD) and vehicle-related data (VD);
- evaluating (11) the collected driver-related data (DD) and vehicle-related data (VD) with regard to aspects related to at least one category to determine a predictive ride evaluation (EV); and
- providing (12) the predictive ride evaluation (EV) to a user (42).

2. The method according to claim 1, wherein the collected driver-related data (DD) and vehicle-related data (VD) comprise current data and a history of past data.

3. The method according to claim 1 or 2, wherein the at least one category is one of safety, reliability, and eco-balance.

4. The method according to any of the preceding claims, wherein the driver-related data (DD) comprises data related to driving behavior of the driver (41), routes driven by the driver (41), condition of the driver (41), or the person of the driver (41).

5. The method according to any of the preceding claims, wherein the vehicle-related data (VD) comprises data related to a configuration of the vehicle (40) or a condition in an interior of the vehicle (40).

6. The method according to any of the preceding claims, wherein the driver-related data (DD) and the vehicle-related data (VD) are obtained using sensors (150, 152) of a vehicle (40), from a driver assistance system (184, 188) of the vehicle (40), from one or more service providers (46), or from input provided by other users (43).

7. The method according to any of the preceding claims, wherein evaluation parameters used for evaluating (11) the collected driver-related data (DD) and vehicle-related data (VD) are location-dependent.

8. The method according to any of the preceding claims, wherein the predictive ride evaluation (EV) is provided (12) to the user (42) through an application running on a mobile device (44) of the user (42), through a ride service portal, or through a display (50) of a vehicle (40).

9. The method according to any of the preceding claims, wherein the method is implemented in a backend (45) of the ride service, in a vehicle (40), or in a mobile device (44).

10. A computer program comprising instructions, which, when executed by a computer, cause the computer to perform a method according to any of claims 1 to 9 for providing a predictive ride evaluation (EV) to a user of a ride service.

11. An apparatus (20) for providing a predictive ride evaluation (EV) to a user of a ride service, the apparatus (20) comprising:
- a data collection module (22) configured to collect (10) driver-related data (DD) and vehicle-related data (VD);
- a data evaluation module (23) configured to evaluate (11) the collected driver-related data (DD) and vehicle-related data (VD) with regard to aspects related to at least one category to determine a predictive ride evaluation (EV); and
- an output module (24) configured to provide (12) the predictive ride evaluation (EV) to a user (42).

12. A vehicle (40), **characterized in that** the vehicle (40) comprises an apparatus (20) according to claim 11 or is configured to perform a method according to any of claims 1 to 9 for providing a predictive ride evaluation (EV) to a user of a ride service.

13. A mobile device (44), **characterized in that** the mobile device (44) comprises an apparatus (20) according to claim 11 or is configured to perform a method according to any of claims 1 to 9 for providing a predictive ride evaluation (EV) to a user of a ride service.

14. A backend (45) for a ride service, **characterized in that** backend (45) comprises an apparatus (20) according to claim 11 or is configured to perform a method according to any of claims 1 to 9 for providing a predictive ride evaluation (EV) to a user of the ride service.
